# EUROPEAN PATENT SPECIFICATION

(11) **EP 1 260 146 B1**
(45) Date of publication and mention of the grant of the patent: **13.09.2006**
(21) Application number: 01904354.6
(22) Date of filing: 08.02.2001
(51) Int. Cl.: A23L 1/22, A23L 1/226

(54) **METHOD OF USE OF A FLAVOR-ENHANCING AGENT FOR FOODS**
VERWENDUNG EINES GESCHMACKSVERSTAERKENDEN MITTELS FUER LEBENSMITTEL
METHODE D'UTILISATION D'UN AGENT RENFOR ATEUR D'AROME POUR DES ALIMENTS

(30) Priority: 15.02.2000 JP 2000036465
(43) Date of publication of application: 27.11.2002
(73) Proprietor: Fuso Chemical Co., Ltd., Osaka-shi, Osaka 541-0043 (JP)
(72) Inventor: NAKAMURA, Tomoyasu, Chuo-ku Osaka-shi Osaka 541-8514 (JP)
(74) Representative: Gille Hrabal Struck Neidlein Prop Roos
(86) International application number: PCT/JP2001/000898
(87) International publication number: WO 2001/060178

(56) References cited:
- EP-A- 1 163 852
- WO-A-98/02051
- WO-A1-00/24273
- JP-A- 9 023 845
- US-A- 4 897 272
- US-A- 5 372 834
- DATABASE WPI Derwent Publications Ltd., London, GB; AN 1998-033435, XP002228630 CHANGHUA ZHANG: 'Nutrient health-care sauce' & CN 1 135 852 A (ZHANG CHANGHUA) 20 November 1996
- DATABASE WPI Derwent Publications Ltd., London, GB; AN 2000-127243 XP002228631 LUI G, LUI Q, REN S: "Preparation of sauce containing extracts from mushroom and calcium" & CN 1 226 393 A (LIU G), 25 August 1999 (1999-08-25)
- DATABASE WPI Derwent Publications Ltd., London, GB; AN 2002-675709 XP002228632 WANG JUN: "Formulation and production process of zinc reinforcing nutrient seasoning" & CN 1 189 981 A (WANG JUN), 18 August 1998 (1998-08-18)
- PATENT ABSTRACTS OF JAPAN vol. 1998, no. 08, 30 June 1998 (1998-06-30) & JP 10 056997 A (FUJISAWA PHARMACEUT CO LTD), 3 March 1998 (1998-03-03)

## Description

The present invention relates to a method for enhancing the flavor of a seasoning by using a nontoxic salt of gluconic acid as an active ingredient.

### BACKGROUND ART

The taste of a food comprises sweetness, saltness, acidity, bitterness and flavor. A food with these elements balanced properly is evaluated as "delicious." In addition, when two or more kinds of substances stimulating the sense of taste are mixed in a food, it is known that they take actions mutually on the taste of the food. These actions provide a synergistic effect, a contrast effect, a masking effect, a cancel effect (inhibitory action), etc. For example, when a nucleic-acid-based flavor substance is added to an aminoacid-based flavor substance, such as glutamic acid, it is known that a synergistic effect occurs wherein the obtained flavor is enhanced synergistically.

It has been found that gluconic acid is a substance that is present in a food as an acidifier and mixed with other acidic substances to provide excellent acidity. In addition, it is known that the gluconic acid is present in many fermented foods, such as brewed vinegar, wine, pickled vegetable and miso, and has an effect on the formation of the rich and full-flavored acidity of fermented foods. This is attained by the taste-forming characteristic of the gluconic acid used as an acidifier. Furthermore, gluconate, such as sodium gluconate or potassium gluconate, that is, an organic acid salt of the gluconic acid, provides a slight salty taste in itself, but is not a flavor substance.

As disclosed in US 5 372 834 gluconic acid, alone or with sclareotide, may act as a total replacer for monosodium glutamate

In these days, among elements constituting taste, substances providing flavors are highly valued as substances being present in foods. In food design for pleasant taste, the utilization of flavor substances has become an important task. A substance that provides no flavor in itself but enhances the flavors of flavor substances mixed therewith has not existed up to now. Hence, such a substance is expected as one of food taste designing means.

### DISCLOSURE OF THE INVENTION

The inventors of the present invention have found that, although gluconate, such as sodium gluconate and potassium gluconate, is not a flavor substance in itself, when the gluconate is mixed with a flavor seasoning and a flavor substance in a processed food, the gluconate has an effect of enhancing their flavors. As a result, the inventors have found a method for enhancing the flavor of the seasoning or food by using a non-toxic salt of gluconic acid as an active ingredient, which is defined by the claims.

The nontoxic salt of gluconic acid may include, for example, an alkaline metal salt of gluconic acid, such as sodium gluconate and potassium gluconate, and an alkaline earth metal salt of gluconic acid, such as calcium gluconate and magnesium gluconate. The particularly preferable salts among these are sodium gluconate and potassium gluconate

The flavor-enhancing agent of the method of the present invention is used in the forms of preparations, such as powder, granule, tablet and solution prepared by the usual manner, containing the nontoxic salt of gluconic acid independently as it is or in appropriate admixture with various additives or solvents. The content of the nontoxic salt of gluconic acid in these preparations is determined as desired.

The additives for the preparations in the forms of powder, granule and tablet may include dietary fiber such as apple fiber, corn fiber, alginic acid, carrot powder, pectin, seaweed polysaccharide and carboxymethyl cellulose; excipients such as lactose and starch; sweeteners such as sucrose, maltose, fructose, sorbitol, mannitol, stevioside and aspartame; nutritional supplements such as vitamin, mineral, milk powder and meat extract; perfume; binders such as gum arabic powder, polyvinyl pyrrolidine and hydroxypropyl cellulose; lubricants such as magnesium stearate, calcium stearate and talc. One or two or more kinds of these are selected and used as necessary.

A solution is generally obtained by dissolving or suspending the nontoxic salt of gluconic acid in a solvent that can dissolve the salt. As such a solvent, water is used most frequently.

In addition, the method of present invention provides seasonings and foods to which the nontoxic salt of gluconic acid is added so as to be contained. The seasonings may consist in socium glutamate, glycin, disodium 5'-ribonucleotide, and disodium succinate. Seasonings may be obtained by using that amino acid, nucleic acid and organic acid as main material independently or in mixture at desired mixture ratios and by subjecting it to processes such as concentration, drying and granulation.

The method for adding the flavor-enhancing agent of the present invention to a seasoning, the flavor of which is enhanced, is not limited particularly. Hence, the method is carried out by mixing, scattering or spraying the agent to the seasoning, food or its materials at the time when the target seasoning is produced or when the target food is processed, cooked or eaten.

The amount of the flavor-enhancing agent added to a seasoning may be increased or decreased as necessary depending on the kind and intensity of the flavor of the seasoning to be enhanced. It is preferable that the effective amount of addition is determined as necessary by carrying out table tests. The ratio of the amount of addition of the flavor-enhancing agent with respect to the amount of extract or broth is generally 0.01 to 5.0%, preferably 0.1 to 1.0%, when the nontoxic salt of gluconic acid is used as the flavor-enhancing agent. As examples, as indicated in Examples described later, a sufficient effect can be obtained when the ratio of the amount of addition is 0.1 to 1.0% with respect to the amount of pork bone extract or dried-bonito broth. The ratio of the amount of addition to a dried seasoning in the form of powder, granule or the like is 1 to 1000 weight parts, preferably 1 to 300 weight parts, with respect to the 100 weight parts of the dried seasoning. As examples, as indicated in Examples described later, a sufficient effect can be obtained when the ratio of the amount of addition is 33 to 333 weight parts with respect to the amount of a mixture flavor seasoning (Hi-Me) (the ratio of the amount of addition is 0.1 to 1.0% with respect to the amount of a 0.3% solution); when the ratio of the amount of addition is 6 to 56 weight parts with respect to the amount of consomme (Consommenomoto) (the ratio of the amount of addition is 0.1 to 1.0% with respect to the amount of a 1.77% solution); and when the ratio of the amount of addition is 13 to 125 weight parts with respect to the amount of kelp broth (Kobudashinomoto) (the amount of addition is 0.1 to 1.0% with respect to the amount of a 0.8% solution).

Examples wherein gluconate was added to various kinds of seasonings and examples wherein the flavor-enhancing effects on the seasonings were evaluated are explained in Examples described below.

The flavor-enhancing effects were evaluated in accordance with the following method, unless otherwise specified.

Samples prepared by adding the flavor-enhancing agent were subjected to a sensory test. In the sensory test, the samples were evaluated by 10 expert panelists in accordance with the following standard. The result of the evaluation was indicated by the average of the evaluation values marked by all the panelists.

Evaluation standard
-3: the flavor was weakened significantly.
-2: the flavor was weakened.
-1: the flavor was weakened slightly.
0: the flavor was unchanged.
+1: the flavor was enhanced slightly.
+2: the flavor was enhanced.
+3: the flavor was enhanced significantly.

### Example 1

Flavor-enhancing effects on flavor substances and seasonings containing the flavor substances

### (1) Sodium glutamate

Sodium glutamate and sodium gluconate were mixed at various mixture ratios and dissolved in water, thereby preparing samples. Each sample was subjected to a sensory test, and its flavor-enhancing effect was evaluated.

**Table 10**

| Concentration* of sodium gluconate | | 0% | 0.05% | 0.1% | 0.3% | 0.5% |
|---|---|---|---|---|---|---|
| Concentration* of sodium glutamate | 0.05% | 0 | 0.2 | 0.4 | 0.7 | 1.2 |
| | 0.1% | 0 | 1.2 | 1.4 | 1.8 | 1.9 |
| | 0.2% | 0 | 1.8 | 1.8 | 1.9 | 2.1 |

| | | | | | | |
|---|---|---|---|---|---|---|
| * Concentration when dissolved in water | | | | | | |

As indicated in the table, the flavor of sodium glutamate was able to be enhanced by adding sodium gluconate to sodium glutamate.

### (2) Glycin

Glycin and sodium gluconate were mixed at various mixture ratios and dissolved in water, thereby preparing samples. Each sample was subjected to a sensory test, and its flavor-enhancing effect was evaluated.

**Table 11**

| Concentration* of sodium gluconate | | 0% | 0.05% | 0.1% | 0.3% | 0.5% |
|---|---|---|---|---|---|---|
| Concentration* | 0.3% | 0 | 0.2 | 0.2 | 0.5 | 0.6 |
| of glycin | 0.5% | 0 | 0.4 | 0.6 | 1.9 | 2.0 |

| | | | | | | |
|---|---|---|---|---|---|---|
| * Concentration when dissolved in water | | | | | | |

As indicated in the table, the flavor of glycin was able to be enhanced by adding sodium gluconate to glycin.

### (3) Disodium succinate

Disodium succinate and sodium gluconate were mixed at various mixture ratios and dissolved in water, thereby preparing samples. Each sample was subjected to a sensory test, and its flavor-enhancing effect was evaluated.

**Table 12**

| Concentration* of sodium gluconate | | 0% | 0.05% | 0.1% | 0.3% | 0.5% |
|---|---|---|---|---|---|---|
| Concentration* of disodium succinate | 0.01% | 0 | 0.6 | 0.8 | 1.7 | 1.7 |
| | 0.05% | 0 | 0.4 | 0.5 | 1.8 | 2.0 |
| | 0.1% | 0 | 1.1 | 1.2 | 1.8 | 1.9 |

| | | | | | | |
|---|---|---|---|---|---|---|
| * Concentration when dissolved in water | | | | | | |

As indicated in the table, the flavor of disodium succinate was able to be enhanced by adding sodium gluconate to disodium succinate.

### (4) Mixture seasoning 1

Mixture seasoning 1 wherein sodium glutamate and disodium 5'-ribonucleotide were mixed at a ratio of 98:2 was further mixed with sodium gluconate at various mixture ratios and dissolved in water, thereby preparing samples. Each sample was subjected to a sensory test, and its flavor-enhancing effect was evaluated.

**Table 13**

| Concentration* of sodium gluconate | | 0% | 0.05% | 0.1% | 0.3% | 0.5% |
|---|---|---|---|---|---|---|
| Concentration* of Mixture seasoning 1 | 0.05% | 0 | 0.8 | 0.8 | 1.6 | 2.0 |
| | 0.1% | 0 | 1.5 | 1.7 | 2.3 | 2.3 |
| | 0.2% | 0 | 0.4 | 0.5 | 2.1 | 2.3 |

| | | | | | | |
|---|---|---|---|---|---|---|
| * Concentration when dissolved in water | | | | | | |

As indicated in the table, the flavor of Mixture seasoning 1 was able to be enhanced by adding sodium gluconate to Mixture seasoning 1.

### (5) Mixture seasoning 2

To a 0.3% solution of Mixture seasoning 2 ("Hi-Me" produced by Ajinomoto Co., Inc., a commercially available mixture seasoning) wherein sodium glutamate, disodium 5'-ribonucleotide and disodium succinate were contained at a mixture ratio of 90:9:1, sodium gluconate was added so as to have a content of 0 to 1%, thereby preparing samples. Each sample was subjected to a sensory test, and its flavor-enhancing effect was evaluated.

**Table 14**

| | | | | | |
|---|---|---|---|---|---|
| Amount of sodium gluconate | 0% | 0.1% | 0.3% | 0.5% | 1.0% |
| Result of evaluation | 0 | 1.0 | 1.2 | 1.9 | 2.0 |

As indicated in the table, the flavor of Mixture seasoning 2 was able to be enhanced by adding sodium gluconate to Mixture seasoning 2.

### INDUSTRIAL APPLICABILITY

The flavor-enhancing agent containing a nontoxic salt of gluconic acid in accordance with the present invention has an effect of enhancing the flavor of a seasoning.

## Claims

1. A method for enhancing flavor of sodium glutamate, glycin, disodium succinate, disodium 5'-ribonucleotide or a mixture thereof in a seasoning by adding an alkaline metal salt or an alkaline earth metal salt of gluconic acid in an amount sufficient to enhance said flavor to said seasoning wherein said seasoning consists of sodium glutamate, glycin, disodium succinate, disodium 5'-ribonucleotide, or mixture thereof.

2. A method according to claim 1,
wherein said alkaline metal salt or alkaline earth metal salt of gluconic acid is added to said seasoning in a ratio of 1 to 1000 weight parts with respect to 100 weight parts of said sodium glutamate, glycin, disodium succinate, disodium 5'-ribonucleotide or a mixture thereof in dried form.

3. A method according to Claim 1,
wherein said seasoning consists of sodium glutamate, disodium 5'-ribonucleotide and disodium succinate,
wherein said alkaline metal salt or alkaline earth metal salt of gluconic acid are added to said seasoning in a ratio of 33 to 333 weight parts with respect to 100 weight parts of said sodium glutamate, glycin, disodium succinate, disodium 5'-ribonucleotide or a mixture thereof in dried form.

## Patentansprüche

1. Verfahren zur Verstärkung des Geschmacks von Natriumglutamat, Glycin, Dinatriumsuccinat, Dinatrium-5'-ribonukleotid oder einer Mischung davon in einer Würze durch Hinzusetzen eines Alkalimetalsalzes oder eines Erdalkalimetallsalzes von Gluconsäure in einer Menge, die ausreichend ist, um den Geschmack der Würze zu verstärken, wobei die Würze aus Natriumglutamat, Glycin, Dinatriumsuccinat, Dinatrium-5'-ribonukleotid oder einer Mischung davon besteht.

2. Verfahren gemäß Anspruch 1,
wobei das Alkalimetallsalz oder Erdalkalimetallsalz von Gluconsäure der Würze in einem Verhältnis von 1 bis 1000 Gewichtsteilen in Bezug auf 100 Gewichtsteile Natriumglutamat, Glycin, Dinatriumsuccinat, Dinatrium-5'-ribonukleotid oder einer Mischung davon in getrockneter Form hinzugesetzt wird.

3. Verfahren gemäß Anspruch 1,
wobei die Würze aus Natriumglutamat, Dinatrium-5'-ribonukleotid und Dinatriumsuccinat besteht,
wobei das Alkalimetallsalz oder Erdalkalimetallsalz von Gluconsäure der Würze in einem Verhältnis von 33 bis 333 Gewichtsteilen in Bezug auf 100 Gewichtsteile Natriumglutamat, Glycin, Dinatriumsuccinat, Dinatrium-5'-ribonukleotid oder einer Mischung davon in getrockneter Form hinzugesetzt wird.

## Revendications

1. Méthode pour renforcer l'arôme du glutamate de sodium, de la glycine, du succinate de disodium, du 5'-ribonucléotide de disodium ou d'un mélange de ces composés dans un agent de sapidité en ajoutant un sel de métal alcalin ou un sel de métal alcalino-terreux d'acide gluconique en une quantité suffisante pour renforcer ledit arôme dans ledit agent de sapidité, dans laquelle ledit agent de sapidité est composé de glutamate de sodium, de glycine, de succinate de disodium, de 5'-ribonucléotide de disodium, ou d'un mélange de ces composés.

2. Méthode selon la revendication 1, dans laquelle ledit sel de métal alcalin ou sel de métal alcalino-terreux d'acide gluconique est ajouté audit agent de sapidité dans un rapport de 1 à 1000 parties en poids par rapport à 100 parties en poids desdits glutamate de sodium, glycine, succinate de disodium, 5'-rlbonucléotide de disodium ou mélange de ces composés sous une forme séchée.

3. Méthode selon la revendication 1,
dans laquelle ledit agent de sapidité est composé de glutamate de sodium, de 5'-ribonucléotide de disodium et de succinate de disodium,
dans laquelle ledit sel de métal alcalin ou ledit sel de métal alcalino-terreux d'acide gluconique sont ajoutés audit agent de sapidité dans un rapport de 33 à 333 parties en poids par rapport à 100 parties en poids desdits glutamate de sodium, glycine, succinate de disodium, 5'-ribonucléotide de disodium ou mélange de ces composés sous une forme séchée.
